(19) Europäisches Patentamt
European Patent Office
Office européen des brevets

(11) **EP 4 517 995 A1**

(12) **EUROPEAN PATENT APPLICATION**
published in accordance with Art. 153(4) EPC

(43) Date of publication:
**05.03.2025 Bulletin 2025/10**

(21) Application number: **22938826.9**

(22) Date of filing: **24.04.2022**

(51) International Patent Classification (IPC):
***H01M 50/431*** (2021.01)

(52) Cooperative Patent Classification (CPC):
**H01M 50/431; Y02E 60/10**

(86) International application number:
**PCT/CN2022/088840**

(87) International publication number:
**WO 2023/205967 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **XIONG, Changchuan
Ningde, Fujian 352100 (CN)**
• **FENG, Bo
Ningde, Fujian 352100 (CN)**
• **WEI, Zengbin
Ningde, Fujian 352100 (CN)**

(74) Representative: **Klunker IP
Patentanwälte PartG mbB
Destouchesstraße 68
80796 München (DE)**

(54) **SEPARATOR AND DEVICE COMPRISING SAME**

(57)    This application relates to a separator and a device containing same. Specifically, the separator disclosed in this application includes a porous substrate and a porous coating. The porous coating is disposed on at least one surface of the porous substrate. The porous coating includes inorganic particles and a binder. The binder includes a first binder. The first binder includes a metal element. The separator of this application is excellent in thermal safety stability and mechanical stability, mainly manifested in that, when a rupture hole is generated on the separator by thermally puncturing the separator by using a round needle with a diameter of R heated to 500 °C, a maximum value of a distance between any two points on an edge of the rupture hole is r in a case that the two points are connected to form a line and the distance between the two points is calculated, satisfying: $400\ \mu m \leq R \leq 1000\ \mu m$, and $0.9 \leq r/R < 5$.

FIG. 1

EP 4 517 995 A1

**Description**

**TECHNICAL FIELD**

This application relates to the technical field of energy storage, and in particular, to a separator and a device containing same.

**BACKGROUND**

Rechargeable secondary batteries are considered to be one of the most attractive energy storage systems by virtue of a high energy density, a relatively simple reaction mechanism, a high operating voltage, a long lifespan, environment-friendliness, and other advantages. Nowadays, secondary batteries have been widely used in various fields such as wearable devices, smartphones, unmanned aerial vehicles, and laptop computers.

With the widespread application of secondary batteries in various fields, the demand for secondary batteries is increasing. However, when a secondary battery is used in some extreme environments (such as impact, nail penetration, and hot oven) or is misused in other scenarios, the battery is at risk of impaired safety performance or even exploding. In view of this, it is urgent to improve the safety performance of secondary batteries.

**SUMMARY**

To solve at least the above problem, this application improves the safety performance of the electrochemical device by improving the separator of the electrochemical device. Specifically, this application provides a separator of high safety performance. The separator is excellent in heat shrink resistance performance, thermal puncture resistance performance, and hot-oven safety performance.

According to an aspect of this application, this application provides a separator. The separator includes a porous substrate and a porous coating. The porous coating is disposed on at least one surface of the porous substrate. The porous coating includes inorganic particles and a binder. The binder includes a first binder. The first binder includes a metal element. When a rupture hole is generated on the separator by thermally puncturing the separator by using a round needle with a diameter of R heated to 500 °C, a maximum value of a distance between any two points on an edge of the rupture hole is r in a case that the two points are connected to form a line and the distance between the two points is calculated, satisfying: $400 \ \mu m \le R \le 1000 \ \mu m$ and $0.9 \le r/R \le 5$.

According to an embodiment of this application, $400 \ \mu m \le r \le 1500 \ \mu m$.

According to an embodiment of this application, compression strength of the binder is $\alpha$ MPa, satisfying: $0.5 \le \alpha \le 10$.

According to an embodiment of this application, a glass transition temperature of the binder is $T_g$, satisfying: $150 \ °C \le T_g \le 300 °C$.

According to an embodiment of this application, the metal element includes at least one of a metal element with a valence of +1, a metal element with a valence of +2, or a metal element with a valence of +3.

According to an embodiment of this application, the metal element includes at least two of a metal element with a valence of +1, a metal element with a valence of +2, or a metal element with a valence of +3.

According to an embodiment of this application, the first binder satisfies at least one of the following conditions (a) to (c): (a) the metal element with a valence of +1 includes at least one of Li or Na; (b) the metal element with a valence of +2 includes at least one of Ca or Mg; or (c) the metal element with a valence of +3 includes Al.

According to an embodiment of this application, the binder satisfies at least one of the following conditions (d) to (e): (d) a molar ratio of the metal element with a valence of +1 to the metal element with a valence of +2 is a, satisfying: $1 \le a \le 10$; or (e) a molar ratio of the metal element with a valence of +1 to the metal element with a valence of +3 is b, satisfying: $1 \le b \le 50$.

According to an embodiment of this application, the first binder includes at least one of a carboxyl group or a sulfonic acid group, and a pH value of the first binder is $pH_1$, satisfying: $7 \le pH_1 \le 11$.

According to an embodiment of this application, the first binder includes at least one of: sodium polymethylcellulose, lithium polymethylcellulose, lithium polycarboxymethylcellulose, lithium polyhydroxypropylmethylcellulose, calcium polyacrylate, lithium polyacrylate, or calcium polymethacrylate.

According to an embodiment of this application, the binder further includes a second binder. Based on a total mass of the porous coating, a mass ratio of the first binder to the second binder is $\beta$, satisfying: $0.2 \le \beta \le 4$.

According to an embodiment of this application, the second binder includes at least one of a carboxyl group or a sulfonic acid group, and a pH value of the second binder is $pH_2$, satisfying: $3 \le pH_2 \le 7$.

According to an embodiment of this application, the second binder includes at least one of: polybutyl acrylate, polyethyl acrylate, polybutyl methacrylate, polymethyl methacrylate, or styrene-butadiene rubber.

According to an embodiment of this application, a specific surface area of the inorganic particles is $S_{BET}$ m$^2$/g, satisfying: $2 \leq S_{BET} \leq 10$.

According to an embodiment of this application, particle diameters $D_{v50}$ and $D_{v99}$ of the inorganic particles satisfy $0.3\ \mu m \leq D_{v50} \leq 3\ \mu m$ and $D_{v99} \leq 4\ \mu m$, respectively.

According to an embodiment of this application, the inorganic particles include at least one of: aluminum oxide, boehmite, zirconium oxide, boron nitride, silicon nitride, or aluminum nitride.

According to an embodiment of this application, the porous coating further includes a wetting agent, and based on a total mass of the porous coating, a mass percent of the inorganic particles is $m_1$ wt%, a mass percent of the binder is $m_2$ wt%, and a mass percent of the wetting agent is $m_3$ wt%, satisfying: $90 \leq m_1 \leq 96$, $3 \leq m_2 \leq 9$, $0.5 \leq m_3 \leq 2$, and $m_1 + m_2 + m_3 = 100$.

According to an embodiment of this application, the wetting agent includes at least one of: polyoxyethylene alkylphenol ether, polyoxyethylene fatty alcohol ether, polyoxyethylene polyoxypropylene block copolymer, or siloxane.

According to an embodiment of this application, when the separator is left to stand at 150 °C for 1 hour, in contrast to an initial length and an initial width of the separator, a heat shrink ratio of the separator in a machine direction MD is $L_1$, and a heat shrink ratio of the separator in a transverse direction TD is $L_2$, satisfying: $L_1 < 10\%$, $L_2 < 10\%$, and $0.75 \leq L_1/L_2 \leq 1.2$.

According to an embodiment of this application, a thickness of the porous coating is $T\ \mu m$, satisfying: $0.5 \leq T \leq 3$.

According to an embodiment of this application, a bonding force of the porous coating is F N/m, satisfying: $5 \leq F \leq 100$.

According to another aspect of this application, this application further provides an electrochemical device. The electrochemical device includes the separator disclosed in the above embodiment of this application.

According to another aspect of this application, this application further provides an electronic device. The electronic device includes the electrochemical device disclosed in the above embodiment of this application.

## BRIEF DESCRIPTION OF DRAWINGS

For ease of describing an embodiment of this application, the following outlines the drawings needed for describing an embodiment of this application or the prior art. Evidently, the drawings outlined below are merely a part of embodiments in this application. Without making any creative efforts, a person skilled in the art can still derive the drawings of other embodiments according to the structures illustrated in the drawings.

FIG. 1 shows a charge coupled device (CCD) image of a separator of this application after being thermally punctured by a round needle with a diameter of R heated to 500 °C; and

FIG. 2 shows a CCD image of a separator in the prior art after being thermally punctured by a round needle with a diameter of R heated to 500 °C.

## DETAILED DESCRIPTION OF EMBODIMENTS

Some embodiments of this application will be described in detail below. No embodiment of this application is to be construed as a limitation on this application.

The terms "include", "comprise" and "contain" used herein are open and mean including but without limitation.

In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

In the description of specific embodiments and claims, a list of items referred to by using the terms such as "one or more of", "one or more thereof", "at least one of" or other similar terms may mean any combination of the listed items. For example, if items A and B are listed, the phrases "at least one of A and B" and "at least one of A or B" mean: A alone; B alone; or both A and B. In another example, if items A, B, and C are listed, the phrase "at least one of A, B, or C" means: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

## Separator

As an important integral part of an electrochemical device, a separator is located between a positive electrode and a negative electrode of the electrochemical device to isolate the positive electrode from the negative electrode while transmitting metal ions (for example, lithium ions), so as to prevent short circuits. However, when used abnormally, the temperature inside an electrode assembly of the electrochemical device may rise sharply, thereby causing the separator to thermally shrink considerably or even melt, and in turn, resulting in direct contact between the positive electrode and the negative electrode and giving rise to a short circuit. Once a short circuit occurs, thermal runaway will occur inside the electrochemical device, resulting in safety hazards such as fire and explosion.

In the prior art, an oil-based separator (for example, aramid high-temperature-resistant separator) is typically used in the electrochemical device to improve the tolerance of the separator to high temperature. However, the oil-based separator imposes a high requirement on the production process and may cause environmental pollution and other problems. In addition, the oil-based separator is costlier than the water-based separator, thereby increasing the production cost of the electrochemical device.

Based on at least the above insights into the prior art, this application investigates the water-based separator as a research object, and improves the thermal stability and mechanical safety performance of the separator by improving the constituents and mass percent of the porous coating in the separator. Specifically, the separator disclosed in this application includes a porous substrate and a porous coating. The porous coating is disposed on at least one surface of the porous substrate. The porous coating includes inorganic particles and a binder. A main characteristic of the separator of this application is: the binder includes a first binder; the first binder includes a metal element; when a rupture hole is generated on the separator by thermally puncturing the separator by using a round needle with a diameter of R heated to 500 °C, a maximum value of a distance between any two points on an edge of the rupture hole is r in a case that the two points are connected to form a line and the distance between the two points is calculated, satisfying: $400 \ \mu m \leq R \leq 1000 \ \mu m$ and $0.9 \leq r/R \leq 5$.

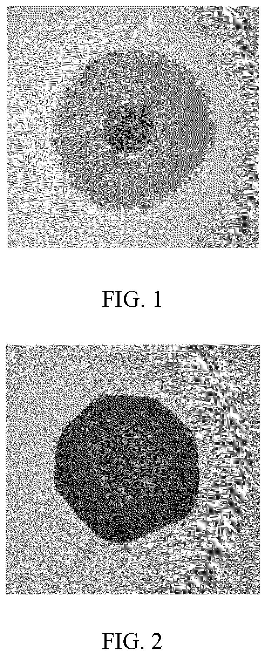

According to one of embodiments of this application, FIG. 1 shows a CCD camera-captured image of a separator thermally punctured by a round needle with a diameter of R (500 $\mu$m) heated to 500 °C. As shown in FIG. 1, a rupture hole is generated on the separator after the separator is thermally punctured by a high-temperature round needle. Observed in a CCD camera, two points farthest away from each other on the edge of the rupture hole are identified, and the distance r between the two points is calculated, where r is 451 $\mu$m. In comparison, a water-based separator commonly used in the prior art is subjected to the same thermal puncture experiment. As can be seen from FIG. 2, the water-based separator in the prior art generates a rupture hole of a relatively large area. For example, the distance between the two points farthest away from each other on the edge of the hole is up to 3088 $\mu$m. The increase in the area of the rupture hole increases the risk of contact between the positive electrode and the negative electrode, thereby causing an internal short circuit in the battery and leading to thermal runaway of the battery.

In some embodiments, R may be, but is not limited to, 400 $\mu$m, 500 $\mu$m, 600 $\mu$m, 700 $\mu$m, 800 $\mu$m, 900 $\mu$m, or 1000 $\mu$m, or a value falling within a range formed by any two thereof. In some embodiments, the r/R ratio may be, but is not limited to, 0.9, 1, 1.2, 1.4, 1.6, 1.8, 2, 2.2, 2.4, 2.6, 2.8, 3, 3.2, 3.4, 3.6, 3.8, 4, 4.2, 4.4, 4.6, 4.8, 5, or a value falling within a range formed by any two thereof. In some embodiments, $1 \leq r/R \leq 1.5$. In some embodiments, $1 \leq r/R \leq 2.5$. In some embodiments, $1 \leq r/R \leq 3.5$. In some embodiments, $1 \leq r/R \leq 4.5$.

In some embodiments, $400 \ \mu m \leq r \leq 1500 \ \mu m$. For example, r may be, but is not limited to, 400 $\mu$m, 500 $\mu$m, 600 $\mu$m, 700 $\mu$m, 800 $\mu$m, 900 $\mu$m, 1000 $\mu$m, 1100 $\mu$m, 1200 $\mu$m, 1300 $\mu$m, 1400 $\mu$m, 1500 $\mu$m, or a value falling within a range formed by any two thereof.

In some embodiments, compression strength of the binder is $\alpha$ MPa, satisfying: $0.5 \leq \alpha \leq 10$. When the compression strength of the binder falls within the above range, the binder can not only connect the dispersed inorganic particles firmly to form a network framework structure, but also bond the inorganic particles and the substrate together to form a whole, thereby ultimately increasing the overall compression strength of the separator. In this way, the separator can resist stress impact more strongly and further suppress damage caused by the impact, thereby further improving the thermal safety performance and mechanical safety performance of the electrochemical device. In some embodiments, $\alpha$ may be, but is not limited to, 0.5, 1, 2, 3, 4, 5, 6, 7, 8, 9, 10, or a value falling within a range formed by any two thereof.

In some embodiments, the glass transition temperature of the binder is $T_g$, satisfying: $150 \ °C \leq T_g \leq 300 \ °C$. When the glass transition temperature of the binder falls within the above range, the binder is not prone to soften or become brittle at high temperature, but can be of appropriate strength to resist stress impact and reduce damage caused by the impact, thereby further improving the thermal safety performance and mechanical safety performance of the electrochemical device. In some embodiments, $T_g$ may be, but is not limited to, 150 °C, 200 °C, 250 °C, 300 °C, or a value falling within a range formed by any two thereof.

In some embodiments, the metal element in the first binder includes at least one of a metal element with a valence of +1, a metal element with a valence of +2, or a metal element with a valence of +3. In some embodiments, the first binder further includes at least one of a carboxyl group or a sulfonic acid group. The metal ions in the first binder can be complexed with the carboxyl group or sulfonic acid group in the first binder to form a metal bond, thereby further increasing the strength of the binder (for example, compression strength). In this way, the separator can resist the stress impact more strongly and suppress damage caused by the impact, thereby further improving the thermal safety performance and mechanical safety performance of the electrochemical device.

In some embodiments, the metal element in the first binder includes at least two of a metal element with a valence of +1, a metal element with a valence of +2, or a metal element with a valence of +3. In contrast to the scenario in which the first binder contains only one type of metal element, at least two different metal elements used in the first binder can further increase the strength of the binder, thereby further improving the ability of the separator to resist stress impact and the stability of the separator at high temperature. A possible reason is: compared with a single metal element, different metal elements can more easily combine with the carboxyl group and/or the sulfonic acid group in the binder to form interpenetrating metal bonds to construct an interpenetrating cross-linked network structure, thereby improving the mechanical properties of the material.

In some embodiments, the metal element with a valence of +1 includes at least one of Li, Na, or K. In some embodiments, the metal element with a valence of +2 includes at least one of Ca, Mg, or Ba. In some embodiments, the metal element with a valence of +3 includes Al. In some embodiments, the first binder includes at least one of Li, Na, Ca, Mg, or Al.

In some embodiments, the first binder includes a metal element with a valence of +1 and a metal element with a valence of +2 concurrently. The molar ratio of the metal element with a valence of +1 to the metal element with a valence of +2 is $a$, satisfying: $1 \leq a \leq 10$. In some embodiments, $a$ may be, but is not limited to, 1, 2, 3, 4, 5, 6, 7, 8, 9, 10, or a value falling within a range formed by any two thereof.

In some embodiments, the first binder includes a metal element with a valence of +1 and a metal element with a valence of +3 concurrently. The molar ratio of the metal element with a valence of +1 to the metal element with a valence of +3 is $b$, satisfying: $1 \leq b \leq 50$. In some embodiments, $b$ may be, but is not limited to, 1, 10, 20, 30, 40, 50, or a value falling within a range formed by any two thereof.

In some embodiments, the first binder includes a metal element with a valence of +2 and a metal element with a valence of +3 concurrently. The molar ratio of the metal element with a valence of +2 to the metal element with a valence of +3 is $p$, satisfying: $1 \leq p \leq 10$. In some embodiments, $p$ may be, but is not limited to, 1, 2, 3, 4, 5, 6, 7, 8, 9, 10, or a value falling within a range formed by any two thereof.

In some embodiments, the first binder satisfies at least one of the following conditions:

(1) The first binder includes Li and Na concurrently, where the molar ratio of Li to Na is $c$, satisfying: $1 \leq c \leq 8$;
(2) The first binder includes Li and Mg concurrently, where the molar ratio of Li to Mg is $d$, satisfying: $2 \leq d \leq 4$;
(3) The first binder includes Na and Mg concurrently, where the molar ratio of Na to Mg is $e$, satisfying: $2 \leq e \leq 4$;
(4) The first binder includes Li and Ca concurrently, where the molar ratio of Li to Ca is $f$, satisfying: $2 \leq f \leq 4$;
(5) The first binder includes Na and Ca concurrently, where the molar ratio of Na to Ca is $g$, satisfying: $2 \leq g \leq 4$;
(6) The first binder includes Li and Al concurrently, where the molar ratio of Li to Al is $m$, satisfying: $1 \leq m \leq 20$; or
(7) The first binder includes Na and Al concurrently, where the molar ratio of Na to Al is $n$, satisfying: $1 \leq n \leq 20$.

In some embodiments, the pH value of the first binder can be adjusted by adjusting the content and proportion of the carboxyl group or the sulfonic acid group and the metal element in the first binder. In some embodiments, the pH value of the first binder is $pH_1$, satisfying: $7 \leq pH_1 \leq 11$. When the pH value of the first binder falls within the above range, the first binder can provide enough metal ions to combine with the carboxyl group or the sulfonic acid group in the first binder to form a metal ion complex bond, thereby further improving the thermal stability and mechanical properties of the separator. In some embodiments, $pH_1$ may be, but is not limited to, 7, 8, 9, 10, 11, or a value falling within a range formed by any two thereof.

In some embodiments, the first binder includes, but is not limited to, at least one of: sodium polymethylcellulose, lithium polymethylcellulose, lithium polycarboxymethylcellulose, lithium polyhydroxypropylmethylcellulose, calcium polyacrylate, lithium polyacrylate, or calcium polymethacrylate.

In some embodiments, based on the total mass of the porous coating, the mass percent of the first binder is $w_1$%, satisfying: $0.5 \leq w_1 \leq 4$. In some embodiments, $w_1$ may be, but is not limited to, 0.2, 0.5, 1, 1.5, 2, 2.5, 3, 3.5, 4, or a value falling within a range formed by any two thereof.

In some embodiments, the first binder is a solution-type binder. The solution-type binder means a solution formed by dissolving a binder polymer in a solvent. In some embodiments, the solvent is water.

In some embodiments, the binder includes a second binder. In some embodiments, the second binder and the first binder are different types of binders. For example, the second binder is an emulsion-type binder. The emulsion-type binder means an emulsion formed by dispersing a binder polymer in a dispersion medium. In some embodiments, the dispersion medium is water.

In some embodiments, based on the total mass of the porous coating, the mass percent of the second binder is $w_2$%, satisfying: $2.5 \leq w_2 \leq 5$. In some embodiments, $w_2$ may be, but is not limited to, 2.5, 3, 4, 5, or a value falling within a range formed by any two thereof.

In some embodiments, the second binder includes at least one of a carboxyl group or a sulfonic acid group. When the binder includes the first binder and the second binder concurrently, the metal ions in the first binder can also be complexed with the carboxyl group or sulfonic acid group in the second binder to form a metal bond and an interpenetrating network structure, thereby further increasing the strength of the binder. In this way, the separator is more capable of resisting the stress impact, thereby further improving the thermal safety performance and mechanical safety performance of the electrochemical device.

In addition, when the binder includes the first binder and the second binder concurrently, the strength of the binder can be further increased by optimizing the mass ratio between the first binder and the second binder. In some embodiments, based on the total mass of the porous coating, the mass ratio between the first binder and the second binder (denoted as $w_1/w_2$) is $\beta$, satisfying: $0.2 \leq \beta \leq 4$. In some embodiments, $\beta$ may be, but is not limited to, 0.2, 0.5, 1, 1.5, 2, 2.5, 3, 3.5, 4, or a value falling within a range formed by any two thereof.

In some embodiments, the pH value of the second binder can be adjusted by adjusting the content and proportion of the carboxyl group and/or the sulfonic acid group in the second binder. In some embodiments, the pH value of the second binder is $pH_2$, satisfying: $3 \leq pH_2 \leq 7$. When falling within the above range, the pH value of the second binder can further improve the thermal stability and mechanical properties of the separator. A possible reason is that the second binder can provide an additional active group (such as a carboxyl or a sulfonic acid group) to increase the probability of complexing with metal ions and form more metal ion complex bonds, thereby improving the mechanical properties of the material. In some embodiments, $pH_2$ may be, but is not limited to, 3, 4, 5, 6, 7, or a value falling within a range formed by any two thereof.

In some embodiments, the second binder includes, but is not limited to, at least one of: polybutyl acrylate, polyethyl acrylate, polybutyl methacrylate, polymethyl methacrylate, or styrene-butadiene rubber.

In some embodiments, a specific surface area of the inorganic particles located in the porous coating is $S_{BET}$ $m^2/g$, satisfying: $2 \leq S_{BET} \leq 10$. In some embodiments, $S_{BET}$ may be, but is not limited to, 2, 3, 4, 5, 6, 7, 8, 9, 10, or a value falling within a range formed by any two thereof. In some embodiments, $2 \leq S_{BET} \leq 5$.

In some embodiments, the particle diameter $D_{v50}$ of the inorganic particles satisfies: $0.3 \ \mu m \leq D_{v50} \leq 3 \ \mu m$. In some embodiments, the particle diameter $D_{v99}$ of the inorganic particles satisfies: $D_{v99} \leq 4 \ \mu m$. $D_{v50}$ is also referred to as a median particle diameter, and is particle diameter value corresponding to a cumulative volume percentage 50% in a volume-based particle size distribution curve. $D_{v99}$ is particle diameter value corresponding to a cumulative volume percentage 99% in a volume-based particle size distribution curve. When falling within the above range, the particle diameters of the inorganic particles are conducive to reducing the thickness of the porous coating and increasing the energy density of the electrochemical device, and also ensure that the bonding sites are located in an appropriate range, thereby reducing the dosage of the binder, and improving the kinetic performance of the electrochemical device.

In some embodiments, the inorganic particles applicable to the separator of this application include, but are not limited to, at least one of: aluminum oxide, boehmite, zirconium oxide, boron nitride, silicon nitride, aluminum nitride, silicon dioxide, magnesium oxide, titanium oxide, silicon carbide, aluminum hydroxide, or magnesium hydroxide.

In some embodiments, the porous coating further includes a wetting agent. The wetting agent serves to improve the wetting capability of the porous coating for the substrate and avoid omission of coating during the coating process. In addition, by optimizing the mass percent of the inorganic particles, the binder, and the wetting agent in the porous coating, this application can further enhance the thermal safety performance and mechanical stability of the separator. In some embodiments, based on the total mass of the porous coating, the mass percent of the inorganic particles is $m_1$ wt%, the mass percent of the binder is $m_2$ wt%, and the mass percent of the wetting agent is $m_3$ wt%, satisfying: $90 \leq m_1 \leq 96$, $3 \leq m_2 \leq 9$, $0.5 \leq m_3 \leq 2$, and $m_1 + m_2 + m_3 = 100$.

In some embodiments, the wetting agent includes, but is not limited to, at least one of: polyoxyethylene alkylphenol ether, polyoxyethylene fatty alcohol ether, polyoxyethylene polyoxypropylene block copolymer, or siloxane.

In some embodiments, when the separator of this application is left to stand at 150 °C for 1 hour, in contrast to an initial length of the separator, the heat shrink ratio of the separator in a machine direction (MD) is $L_1$; in contrast to an initial width of the separator, the heat shrink ratio of the separator in a transverse direction (TD) is $L_2$, satisfying: $L_1 < 10\%$, $L_2 < 10\%$, and $0.75 \leq L_1/L_2 \leq 1.2$. In some embodiments, $L_1$ and $L_2$ may be, but are not limited to, 1%, 2%, 3%, 4%, 5%, 6%, 7%, 8%, or 9%, or a value falling within a range formed by any two thereof. In some embodiments, the $L_1/L_2$ ratio may be, but is not limited to, 0.8, 0.9, 1.0, 1.1, 1.2, or a value falling within a range formed by any two thereof.

In some embodiments, the thickness of the porous coating is $T \ \mu m$, satisfying: $0.5 \leq T \leq 3$. When falling within the above range, the thickness of the porous coating not only increases the energy density of the electrochemical device, but also improves the kinetic performance of the electrochemical device. In some embodiments, T may be, but is not limited to, 0.5, 1, 1.5, 2, 2.5, 3, or a value falling within a range formed by any two thereof. When both surfaces of the porous substrate are coated with the porous coating, the "thickness of the porous coating" means a sum of thicknesses of the porous coatings applied on the two surfaces.

In some embodiments, the bonding force of the porous coating is F N/m, satisfying: $5 \leq F \leq 100$. When falling within the above range, the bonding force of the porous coating not only bonds the inorganic particles firmly to the porous substrate and prevents the inorganic particles from falling off, but also avoids overuse of the binder. The overuse of the binder deteriorates the kinetic performance of the electrochemical device. In some embodiments, F may be, but is not limited to, 5, 10, 20, 30, 40, 50, 60, 70, 80, 90, 100, or a value falling within a range formed by any two thereof. In some embodiments, $20 \leq F \leq 85$.

In some embodiments, the porous substrate may include, but is not limited to, at least one of: polyethylene (PE), ultra-high molecular weight polyethylene (UHMWPE), high-density polyethylene (HDPE), polypropylene (PP), polyethylene terephthalate (PET), polyphenylene sulfide (PPS), cellulose, polyimide, polystyrene (PS), poly-4-methyl-1-pentene (TPX), polymethyl methacrylate (PMMA), polyvinylidene fluoride (PVDF), polyvinylidene fluoride-hexafluoropropylene (PVDF-HFP), polytetrafluoroethylene (PTFE), or polysulfone.

In addition, this application provides an electrochemical device. The electrochemical device includes the separator disclosed in the above embodiment of this application. In some embodiments, the electrochemical device further includes a negative electrode, a positive electrode, and an electrolyte solution, where the separator is located between the positive electrode and the negative electrode. Next, this application will describe in detail the composition of a positive electrode, a negative electrode, and an electrolyte.

**Positive electrode**

The positive electrode includes a positive electrode material. The positive electrode material includes a positive electrode material capable of absorbing and releasing lithium (Li) (hereinafter sometimes referred to as "positive electrode material capable of absorbing/releasing lithium Li"). Examples of the positive electrode material capable of absorbing or releasing lithium (Li) may include lithium cobalt oxide, lithium nickel cobalt manganese oxide, lithium nickel cobalt aluminum oxide, lithium manganese oxide, lithium iron manganese phosphate, lithium vanadium phosphate, lithium vanadyl phosphate, lithium iron phosphate, lithium titanium oxide, and a lithium-rich manganese-based materials.

Specifically, the chemical formula of the lithium cobalt oxide may be Chemical Formula 1:

$$Li_{x1}Co_{a1}M1_{b1}O_{2-c1} \qquad \text{Chemical Formula 1}$$

In the formula above, M1 is at least one selected from nickel (Ni), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), yttrium (Y), lanthanum (La), zirconium (Zr), and silicon (Si); and values of x1, a1, b1, and c1 fall within the following ranges: $0.8 \leq x1 \leq 1.2$, $0.8 \leq a1 \leq 1$, $0 \leq b1 \leq 0.2$, $-0.1 \leq c1 \leq 0.2$, respectively.

The chemical formula of lithium nickel cobalt manganese oxide or lithium nickel cobalt aluminum oxide may be Chemical Formula 2:

$$Li_{y1}Ni_{d1}M2_{e1}O_{2-f1} \qquad \text{Chemical Formula 2}$$

In the formula above, M2 is at least one selected from cobalt (Co), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), zirconium (Zr), and silicon (Si); and the values of y1, d1, e1, and f1 fall within the following ranges: $0.8 \leq y1 \leq 1.2$, $0.3 \leq d1 \leq 0.98$, $0.02 \leq e1 \leq 0.7$, $-0.1 \leq f1 \leq 0.2$, respectively.

The chemical formula of the lithium manganese oxide may be Chemical Formula 3:

$$Li_{z1}Mn_{2-g1}M3_{g1}O_{4-h1} \qquad \text{Chemical Formula 3}$$

In the formula above, M3 is at least one selected from cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), and tungsten (W); and the values of z1, g1, and h1 fall within the following ranges: $0.8 \leq z1 \leq 1.2$, $0 \leq g1 < 1.0$, and $-0.2 \leq h1 \leq 0.2$, respectively.

**Negative electrode**

The negative electrode includes a negative electrode material. The negative electrode material includes a negative electrode material capable of absorbing and releasing lithium (Li) (hereinafter sometimes referred to as "negative electrode material capable of absorbing/releasing lithium Li"). Examples of the negative electrode material capable of absorbing/releasing lithium (Li) may include a carbon material, a metal compound, an oxide, a sulfide, a lithium nitride such as $LiN_3$, a lithium metal, a metal that combines with lithium into an alloy, and a polymer material.

Examples of the carbon material may include low-graphitization carbon, easily graphitizable carbon, artificial graphite, natural graphite, mesocarbon microbead, soft carbon, hard carbon, pyrolytic carbon, coke, glassy carbon, an organic polymer compound sintered body, carbon fibers, and activated carbon. The coke may include pitch coke, needle coke, and petroleum coke. The organic polymer compound sintered body means a material obtained by calcining a polymer material such as phenol plastic or furan resin at an appropriate temperature until carbonization. Some of the obtained material is classed into low-graphitization carbon and easily graphitizable carbon. Examples of the polymer material may include polyacetylene and polypyrrole.

Among the negative electrode materials capable of absorbing/releasing lithium (Li), further, a material with charge and discharge voltages close to the charge and discharge voltages of lithium metal is selected. That is because, the lower the charge and discharge voltages of the negative electrode material, the more easily the electrochemical device (such as a lithium-ion battery) can achieve a higher energy density. A carbon material may be selected as the negative electrode material. Because a crystal structure of the carbon material changes just a little during charging and discharging, the carbon material helps to achieve excellent cycle performance and a high charge capacity and discharge capacity. Especially, graphite may be selected as the negative electrode material because graphite provides a large electrochemical equivalent and a high energy density.

In addition, the negative electrode materials capable of absorbing/releasing lithium (Li) may include simple-substance lithium metal, a metal element or semi-metal element alloyable with lithium (Li), an alloy or compound containing such element, and the like. Especially, the negative electrode materials are used together with a carbon material to achieve excellent cycle characteristics and a high energy density. The alloy used herein may be an alloy that contains two or more metal elements, or may be an alloy that contains one or more metal elements and one or more semi-metal elements. The alloy may be in one of the following states: solid solution, eutectic crystal (eutectic mixture), intermetallic compound, and a mixture thereof.

Examples of the metal elements and semi-metal elements may include tin (Sn), lead (Pb), aluminum (Al), indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), zirconium (Zr), yttrium (Y), and hafnium (Hf). Examples of the alloy and compound may include a material represented by a chemical formula $Ma_sMb_tLi_u$ and a material represented by a chemical formula $Ma_pMc_qMd_r$. In such chemical formulas, Ma represents at least one element among the metal elements and semi-metal elements that can combine with lithium to form an alloy; Mb represents at least one element among the metal elements and semi-metal elements other than lithium and Ma; Mc represents at least one element among non-metal elements; Md represents at least one element among the metal elements and semi-metal elements other than Ma; and s, t, u, p, q, and r satisfy $s > 0$, $t \geq 0$, $u \geq 0$, $p > 0$, $q > 0$, and $r > 0$.

In addition, an inorganic compound containing no lithium (Li), such as $MnO_2$, $V_2O_5$, $V_6O_{13}$, NiS, and MoS, may be used in the negative electrode.

**Electrolyte**

The electrolyte may be one or more of a gel electrolyte, a solid-state electrolyte, or an electrolyte solution. The electrolyte solution includes a lithium salt and a nonaqueous solvent.

The lithium salt is one or more selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, the lithium salt is $LiPF_6$ because it provides a high ionic conductivity and improves cycle characteristics.

The nonaqueous solvent may be a carbonate ester compound, a carboxylate ester compound, an ether compound, another organic solvent, or any combination thereof.

The carbonate ester compound may be a chain carbonate ester compound, a cyclic carbonate ester compound, a fluorocarbonate ester compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, $\gamma$-butyrolactone, decanolactone, valerolactone, mevalonolactone, caprolactone, methyl formate, and any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, and any combination thereof.

The electrochemical device according to this application may be any device in which an electrochemical reaction occurs. Specific examples of the electrochemical device include all kinds of primary batteries, secondary batteries, fuel batteries, solar batteries, or capacitors. In particular, the electrochemical device is a sodium secondary battery, a lithium secondary battery, or a polymer secondary battery.

This application further provides an electronic device containing the electrochemical device according to this application.

The uses of the electrochemical device of this application are not particularly limited, and the electrochemical device may be used in any electronic device known in the prior art. In some embodiments, the electrochemical device of this application is applicable to, but not limited to use in, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, capacitor, and the like.

By using a lithium-ion battery as an example, the following describes a preparation method of a lithium-ion battery with reference to specific embodiments. A person skilled in the art understands that the preparation methods described in this application are merely examples, and any other appropriate preparation methods still fall within the scope of this application.

**Embodiments**

The following describes some embodiments and comparative embodiments of preparing a lithium-ion battery according to this application, and evaluates performance of the lithium-ion batteries.

I. Preparing a lithium-ion battery

1. Preparing a binder

Process of preparing an acrylic-based binder: 1. Adding an appropriate amount of acrylic monomer into a reactor, adding an appropriate amount of catalyst, and stirring well slowly; 2. adding an appropriate amount of sulfonic acid group-containing monomer or carboxyl-containing monomer (for example, methylpropane sulfonic acid or methacrylic acid) into the reactor; 3. passing an inert gas into the reactor to form a reaction protection atmosphere; 4. heating the reactor to a reaction temperature so that the monomers are polymerized to obtain a binder containing the two functional groups; 5. adding a metal base upon completion of the reaction, and adjusting the pH of the reaction product to obtain the desired binder.

By changing the type of reacting monomers, binders containing different functional groups can be obtained. By selecting different types of metal bases (for example, sodium hydroxide, or magnesium hydroxide) or adjusting the mass percent of each metal base, the type and mass percent of the metal bases in the binder can be designed and regulated.

Process of preparing a cellulose binder: 1. Placing an appropriate amount of raw cellulose into a reactor, and then adding a metal base (sodium hydroxide) to alkalize the cellulose to obtain alkalized cellulose; 2. adding an appropriate amount of chloroacetic acid into the alkalized cellulose to carry out an etherification reaction, and finally obtaining a sodium cellulose binder.

During the alkalization, the relevant process parameters such as the type and mass percent of the metal bases may be changed to design and regulate the type and mass percent of the metal bases in the binder.

2. Method for preparing a separator

Mixing water and inorganic particles well, and then adding a specified amount of binder, placing the mixture into a stirrer, and stirring well. Subsequently, adding a specified amount of wetting agent into the above slurry, and continuing to stir until the mixture is homogeneous. Finally, applying the slurry evenly onto a single side of the substrate PE until an appropriate thickness, and placing the well coated substrate into an oven for drying to obtain a separator of this application. The constituents and mass percent of the inorganic particles, binder, and wetting agent, the coating thickness, and other parameters are shown in Table 1 in detail.

3. Method for preparing a lithium-ion battery

Dissolving lithium cobalt oxide as a positive active material, conductive carbon (Super P), and polyvinylidene difluoride (PVDF) as a binder at a mass ratio of 96: 2: 2 in an N-methylpyrrolidone solvent system, and mixing well to form a positive electrode slurry. Coating an aluminum foil with the positive electrode slurry, and performing drying, cold-pressing, and slitting to obtain a positive electrode.

Dissolving artificial graphite as a negative active material, Super P as a conductive agent, styrene-butadiene rubber as a binder, and sodium carboxymethyl cellulose as a thickener at a mass ratio of 98: 0.5: 1: 0.5 in a deionized water solvent system, and mixing well to obtain a negative electrode slurry. Coating a copper foil with the negative electrode slurry, and performing drying, cold-pressing, and slitting to obtain a negative electrode.

Mixing a lithium salt $LiPF_6$ and a nonaqueous organic solvent at a mass ratio of 8: 92 to obtain a solution serving as an electrolyte solution of the lithium-ion battery, where the nonaqueous organic solvent is a product of mixing ethylene carbonate (EC), diethyl carbonate (DEC), propylene carbonate (PC), propyl propionate (PP), vinylene carbonate (VC) at a mass ratio of 20: 30: 20: 28: 2.

Stacking the positive electrode, the separator, and the negative electrode sequentially in such a way that the separator is located between the positive electrode and the negative electrode, and winding the stacked structure to obtain an electrode assembly. Placing the electrode assembly into an outer package, injecting the electrolyte solution into the package, sealing the package, and performing chemical formation to finally obtain a lithium-ion battery.

II. Test methods

1. Separator puncture test

First, fixing a separator with a porous coating onto a test jig flatly, and placing the jig to a position that is vertically below the movable bracket of a GoTech tensile machine; next, fixing a testing hot needle onto the movable bracket of the GoTech tensile machine vertically to ensure that the hot needle can vertically puncture the separator; subsequently, moving the movable bracket of the GoTech tensile machine to drive the hot needle to vertically puncture the separator at a specified speed (20 cm/min) to a depth of 2 cm to 4 cm; letting the hot needle stop for 1 minute after the separator is punctured, and then returning the hot needle to the initial position; and finally, taking out the separator specimen, measuring and calculating the distance between any two points on the edge of the rupture hole by use of a CCD camera after connecting the two points, and recording the maximum value of the distance as r.

2. Testing the compression strength of the binder

Placing a binder adhesive film specimen (10 mm × 10 mm × 10 mm in size) in the middle of two press plates of a universal tensile tester, and applying a stress along a direction vertical to the two end faces of the specimen at a constant speed (10 mm/min) to compress the specimen so that the specimen is shortened along the axial direction and enlarged in the radial direction, thereby resulting in compression deformation until the specimen is ruptured. Reading the maximum load stress value $P_{max}$ applied by the universal tensile tester, and calculating the compression strength $\alpha$ of the binder by using the following formula:

$$\alpha = P_{max}/S.$$

In the formula above, S is the initial cross-sectional area of the specimen.

3. Testing the glass transition temperature of the binder

Taking a specified amount (10 to 20 mg) of binder adhesive film specimen, placing the specimen into a heating crucible of a differential scanning calorimeter, starting the test program of the instrument, and obtaining a Temp-DSC curve through test software. Generally, the temperature corresponding to the first change step of the curve is the glass transition temperature of the binder.

4. Determining the metal elements in the binder and the mass ratio between the metal elements

Placing a battery into a glovebox and disassembling the battery. Taking out a separator of the battery, and removing the PVDF/PMMA adhesive layer applied onto the porous coating, and retaining the porous coating. Re-dispersing the porous coating into water by "water-washing", and separating the inorganic particles by centrifugation to obtain a water-wash clear liquid, where the water-wash clear liquid contains the binder. Testing the water-wash clear liquid by using an inductively coupled plasma (ICP) optical emission spectrometer, so as to determine the metal elements in the binder and the mass ratio between the metal elements.

5. Determining the specific surface area of the inorganic particles

Starting the test software, taking a specified amount of inorganic particles and placing the inorganic particles into a specimen test chamber. Determining the specific surface area of the inorganic particles by using a BET specific surface area determination method. After the specific surface area is determined, the test software automatically reads the value of the specific surface area of the inorganic particles.

### 6. Determining the particle diameter of the inorganic particles

Starting the test software, placing the inorganic particles that meet the test quality requirements into a test chamber of a Malvern 3000 laser particle size analyzer, and then performing ultrasonication for 5 minutes to ensure that the particles are not agglomerated. Subsequently, proceeding to determine the particle diameter, and letting the software output a particle size distribution curve.

### 7. Testing the heat shrinkage of the separator in the MD and TD directions

First, cutting the separator into specimens of $MD_1$ in length and $TD_1$ in width ($MD_1 = 10$ cm, $TD_1 = 5$ cm) to obtain separator specimens. Next, placing the cut separator specimen between two pieces of A4 papers, and baking the specimen in a 150 °C oven for 1 hour. Subsequently, using a CCD camera to measure the length and width of the separator specimen that has been baked at 150 °C for 1 hour, denoted as $MD_2$ and $TD_2$ respectively. Finally, calculating the heat shrink ratio $L_1$ of the separator in the MD direction and the heat shrink ratio $L_2$ of the separator in the TD direction by using the following formula:

$$L_1 = (MD_1 - MD_2)/MD_1;$$

and

$$L_2 = (TD_1 - TD_2)/TD_1.$$

### 8. Measuring the thickness of the porous coating

Measuring the thicknesses of the substrate and the separator by using a benchtop separator thickness gauge, denoted as $T_1$ μm and T μm respectively. Calculating the thickness of the porous coating (denoted as $T_2$ μm) by using the following formula:

$$T_2 = T - T_1.$$

### 9. Measuring the bonding force of the porous coating

First, laying the coated separator specimen flat on a glass substrate, keeping the porous coating upward, and fixing the four sides of the specimen by use of adhesive tape to ensure that the separator is fixed flat on the glass substrate. Next, sticking peel-force-specific tape flat onto the surface of the porous coating. Subsequently, using a 1 kg pressure roller to roll the bonding region of the peel-force-specific tape back and forth. Afterward, cutting out a 15 mm $\times$ 54.2 mm separator specimen in the bonding region of the peel-force-specific tape. Finally, fixing one side of the separator specimen onto one end of a GoTech tensile machine, and fixing the tape side onto the movable bracket end of the GoTech tensile machine. Moving the movable bracket to stretch the tape at a specified speed so that the tape is peeled off at 180° from the surface of separator. The value read by the test software is the bonding force of the porous coating.

### 10. Hot-oven test

Taking 100 lithium-ion batteries as specimens. Charging the lithium-ion battery specimens at a constant current rate of 0.5C at normal temperature until the voltage reaches 4.5 V, and then charging the batteries at a constant voltage of 4.5 V until the current is lower than 0.05C so that the batteries are in a 4.5 V fully charged state. Putting the lithium-ion battery specimens into an oven, and leaving the specimens to stand at 137 °C for 1 hour. The lithium-ion batteries that are free from smoking, catching fire, and exploding pass the test, and the lithium-ion batteries that smoke, catch fire, or explode fail the test. The hot-oven test pass rate is a ratio of the number of lithium-ion batteries that pass the test to the total number of lithium-ion battery specimens.

11. Nail penetration test

First, checking the appearance of the battery and taking photos before and after the nail penetration test; second, sticking a temperature sensing wire to the center of the surface of the battery; next, placing the battery specimen onto a test benchtop in a $20\pm5$ °C test environment, and using a 2.5 mm-diameter steel nail to penetrate the battery specimen from the center of the specimen at a speed of 150 mm/s until the specimen is completely pierced. The battery that neither catches fire nor explodes passes the test.

III. Test results

Table 1 shows how the pH value and content of the binder affect the properties of the binder, the properties of the separator, and the electrochemical properties. As can be seen from Table 1, in contrast to the comparative embodiments, in the embodiments, both the first binder and the second binder are used, and the pH value and content of both the first binder and the second binder are adjusted to satisfy $7 \leq pH_1 \leq 11$, $3 \leq pH_2 \leq 7$, $0.5 \leq w_1 \leq 4$, and $2.5 \leq w_2 \leq 5$ to achieve the following results: (1) the compression strength and the temperature $T_g$ of the resultant binder are relatively high; (2) after the separator is baked at 150 °C for 1 hour, the heat shrink ratios of the separator in the MD direction and the TD direction in the embodiments are lower, and the rupture holes generated in the thermal puncture test are smaller; and (3) all the electrochemical devices in the embodiments pass the hot-oven test and the nail penetration test.

Table 2 shows improved embodiments on the basis of Embodiment 1-1. In the improved embodiments, the total mass percent of the first binder and second binder added remains the same, and the only difference is the mass ratio of the first binder to the second binder. As can be seen from the data in Table 2, by further adjusting the mass ratio of the first binder to the second binder (denoted as $w_1/w_2$) to satisfy $0.2 \leq w_1/w_2 \leq 1.6$, the corresponding embodiments can further improve the tensile strength of the binder, the thermal stability of the separator, and the safety performance of the electrochemical device.

Table 3 shows improved embodiments on the basis of Embodiment 1-1. In the improved embodiments, the total quantity of charges of the metal elements added in the first binder is the same (that is, one acidic group (carboxyl group/sulfonic acid group) in the first binder reacts with one $1^+$ valent metal ion, and so on), and the only difference is the types of the added metal elements and the mass ratio between the metal elements. As can be seen from the data in Table 3, in contrast to a scenario in which only one type of metal element is added, after two types of metal elements are added into the first binder, the compression strength of the binder, the thermal stability of the separator, and the safety performance of the electrochemical device are further improved.

In addition, as can be seen from Embodiments 3-6 to 3-15, when the mass ratio of the metal element with a valence of +1 to the metal element with a valence of +2, denoted as a, falls within a range of $1 \leq a \leq 10$, the performance of the binder, the separator, and the electrochemical device can be further improved. As can be seen from Embodiments 3-16 to 3-20, when the mass ratio of the metal element with a valence of +1 to the metal element with a valence of +3, denoted as b, falls within a range of $1 \leq b \leq 50$, the performance of the binder, the separator, and the electrochemical device can be further improved.

Table 4 shows improved embodiments on the basis of Embodiment 3-7. In the improved embodiments, the only difference is the composition, median particle diameter, and mass percent of the inorganic particles. As can be seen from Embodiments 3-7 to 4-5, selecting aluminum oxide, boehmite, zirconium oxide, boron nitride, silicon nitride, or aluminum nitride as the inorganic particles in the porous coating can produce a separator and an electrochemical device that are excellent in high-temperature performance.

As can be seen from Embodiments 4-6 to 4-12, when the median particle diameter $D_{v50}$ of the inorganic particles satisfies $0.3\ \mu m \leq D_{v50} \leq 2\ \mu m$, the high-temperature performance of the separator and the electrochemical device is more excellent.

As can be seen from Embodiments 4-13 to 4-16, based on the total mass of the porous coating, when the mass percent of the inorganic particles, denoted as $m_1$ wt%, satisfies $90 \leq m_1 \leq 96$, the high-temperature performance of the separator and the electrochemical device is more excellent.

Table 5 shows improved embodiments on the basis of Embodiment 3-7. In the improved embodiments, the only difference is the constituents and mass percent of the wetting agent. As can be seen from Table 5, selecting polyoxyethylene alkylphenol ether, polyoxyethylene fatty alcohol ether, polyoxyethylene polyoxypropylene block copolymer, or siloxane as a wetting agent in the porous coating can achieve a separator and an electrochemical device of excellent high-temperature performance.

As can be seen from Embodiments 5-3 to 5-7, based on the total mass of the porous coating, when the mass percent of the wetting agent, denoted as $m_3$ wt%, satisfies $0.5 \leq m_3 \leq 1.5$, the high-temperature performance of the separator and the electrochemical device is more excellent.

Table 6 shows improved embodiments on the basis of Embodiment 4-6. In the improved embodiments, the only difference is the thickness of the porous coating. As can be seen from Table 6, when the thickness T of the porous coating falls within the range of $0.5 \leq T \leq 3$, the high-temperature performance of the separator and the electrochemical device is more excellent.

**Table 1 (To be continued)**

| | First binder | Second binder | pH$_1$ of first binder | pH$_2$ of second binder | pH$_1$/pH$_2$ |
|---|---|---|---|---|---|
| Embodiment 1-1 | Lithium methyl cellulose | Methyl acrylate | 7.5 | 7.0 | 1.07 |
| Embodiment 1-2 | Lithium carboxymethyl cellulose | Methyl acrylate | 7.5 | 7.0 | 1.07 |
| Embodiment 1-3 | Sodium hydroxypropyl methyl cellulose | Methyl acrylate | 7.5 | 7.0 | 1.07 |
| Embodiment 1-4 | Sodium acrylate | Methyl acrylate | 7.5 | 7.0 | 1.07 |
| Embodiment 1-5 | Calcium methacrylate | Methyl acrylate | 7.5 | 7.0 | 1.07 |
| Embodiment 1-6 | Calcium acrylate | Methyl acrylate | 7.5 | 7.0 | 1.07 |
| Embodiment 1-7 | Magnesium acrylate | Methyl acrylate | 7.5 | 7.0 | 1.07 |
| Embodiment 1-8 | Magnesium methyl cellulose | Methyl acrylate | 7.5 | 7.0 | 1.07 |
| Embodiment 1-9 | Magnesium acrylate | Styrene-butadiene rubber | 7.5 | 7.0 | 1.07 |
| Embodiment 1-10 | Magnesium acrylate | Methacrylate | 7.5 | 7.0 | 1.07 |
| Embodiment 1-11 | Magnesium acrylate | Butyl acrylate | 7.5 | 7.0 | 1.07 |
| Embodiment 1-12 | Magnesium acrylate | Methyl methacrylate | 7.5 | 7.0 | 1.07 |
| Embodiment 1-13 | Magnesium acrylate | Ethyl methacrylate | 7.5 | 7.0 | 1.07 |
| Embodiment 1-14 | Magnesium acrylate | Ethyl methacrylate | 7.0 | 7.0 | 1.00 |
| Embodiment 1-15 | Magnesium acrylate | Ethyl methacrylate | 8.5 | 7.0 | 1.21 |
| Embodiment 1-16 | Magnesium acrylate | Ethyl methacrylate | 10.5 | 7.0 | 1.50 |
| Embodiment 1-17 | Magnesium acrylate | Ethyl methacrylate | 11.0 | 7.0 | 1.57 |
| Embodiment 1-18 | Magnesium acrylate | Ethyl methacrylate | 7.5 | 3.0 | 2.50 |
| Embodiment 1-19 | Magnesium acrylate | Ethyl methacrylate | 7.5 | 4.5 | 1.67 |
| Embodiment 1-20 | Magnesium acrylate | Ethyl methacrylate | 7.5 | 6.0 | 1.25 |
| Embodiment 1-21 | Magnesium acrylate | Ethyl methacrylate | 7.5 | 6.5 | 1.15 |
| Embodiment 1-22 | Magnesium acrylate | Ethyl methacrylate | 7.5 | 7.0 | 1.07 |

(continued)

|  | First binder | Second binder | $pH_1$ of first binder | $pH_2$ of second binder | $pH_1/pH_2$ |
|---|---|---|---|---|---|
| Embodiment 1-23 | Magnesium acrylate | Ethyl methacrylate | 7.5 | 7.0 | 1.07 |
| Embodiment 1-24 | Magnesium acrylate | Ethyl methacrylate | 7.5 | 7.0 | 1.07 |
| Embodiment 1-25 | Magnesium acrylate | Ethyl methacrylate | 7.5 | 7.0 | 1.07 |
| Embodiment 1-26 | Magnesium acrylate | Ethyl methacrylate | 7.5 | 7.0 | 1.07 |
| Comparative Embodiment 1-1 | Lithium methyl cellulose | - | 7.5 | - | - |
| Comparative Embodiment 1-2 | Sodium acrylate | - | 7.5 | - | - |
| Comparative Embodiment 1-3 | Lithium methyl cellulose | Methyl acrylate | 3.5 | 7.0 | 0.50 |
| Comparative Embodiment 1-4 | Sodium acrylate | Methyl acrylate | 2.8 | 7.0 | 0.40 |
| Comparative Embodiment 1-5 | Lithium methyl cellulose | Methyl acrylate | 7.5 | 7.0 | 1.07 |
| Comparative Embodiment 1-6 | Sodium acrylate | Methyl acrylate | 7.5 | 7.0 | 1.07 |

**Table 1 (Continued)**

|  | Function al group in first binder | Function al group in second binder | Mass percent of first binder $w_1$ (%) | Mass percent of second binder $w_2$ (%) | Compressi on strength of binder $\alpha$ (MPa) | Tg of binder (°C) | Bonding force of porous coating (N/m) |
|---|---|---|---|---|---|---|---|
| Embodiment 1-1 | Carboxy l | Carboxy l | 0.5 | 5 | 4.5 | 175 | 45 |
| Embodiment 1-2 | Carboxy l | Carboxy l | 0.5 | 5 | 4.4 | 177 | 44 |
| Embodiment 1-3 | Carboxy l | Carboxy l | 0.5 | 5 | 4.5 | 179 | 46 |
| Embodiment 1-4 | Carboxy l | Carboxy l | 0.5 | 5 | 4.5 | 178 | 47 |
| Embodiment 1-5 | Carboxy l | Carboxy l | 0.5 | 5 | 4.9 | 188 | 50 |
| Embodiment 1-6 | Carboxy l | Carboxy l | 0.5 | 5 | 5.1 | 194 | 44 |
| Embodiment 1-7 | Carboxy l | Carboxy l | 0.5 | 5 | 5.1 | 195 | 49 |
| Embodiment 1-8 | Carboxy l | Carboxy l | 0.5 | 5 | 5.0 | 194 | 44 |
| Embodiment 1-9 | Carboxy l | Carboxy l | 0.5 | 5 | 5.3 | 198 | 51 |

(continued)

| | Function al group in first binder | Function al group in second binder | Mass percent of first binder $w_1$ (%) | Mass percent of second binder $w_2$ (%) | Compressi on strength of binder $\alpha$ (MPa) | Tg of binder (°C) | Bonding force of porous coating (N/m) |
|---|---|---|---|---|---|---|---|
| Embodiment 1-10 | Carboxyl | Carboxyl | 0.5 | 5 | 5.2 | 195 | 55 |
| Embodiment 1-11 | Carboxyl | Carboxyl | 0.5 | 5 | 5.2 | 194 | 52 |
| Embodiment 1-12 | Carboxyl | Carboxyl | 0.5 | 5 | 5.5 | 197 | 48 |
| Embodiment 1-13 | Carboxyl | Carboxyl | 0.5 | 5 | 5.4 | 195 | 47 |
| Embodiment 1-14 | Carboxyl | Carboxyl | 0.5 | 5 | 5.3 | 195 | 49 |
| Embodiment 1-15 | Carboxyl | Carboxyl | 0.5 | 5 | 5.8 | 199 | 42 |
| Embodiment 1-16 | Carboxyl | Carboxyl | 0.5 | 5 | 6.1 | 199 | 51 |
| Embodiment 1-17 | Carboxyl | Carboxyl | 0.5 | 5 | 7.1 | 211 | 52 |
| Embodiment 1-18 | Carboxyl | Carboxyl | 0.5 | 5 | 6.5 | 193 | 44 |
| Embodiment 1-19 | Carboxyl | Carboxyl | 0.5 | 5 | 6.2 | 195 | 48 |
| Embodiment 1-20 | Carboxyl | Carboxyl | 0.5 | 5 | 5.8 | 191 | 54 |
| Embodiment 1-21 | Carboxyl | Carboxyl | 0.5 | 5 | 5.5 | 195 | 53 |
| Embodiment 1-22 | Sulfonic acid group | Carboxyl | 0.5 | 5 | 5.4 | 196 | 52 |
| Embodiment 1-23 | Carboxy 1 | Sulfonic acid group | 0.5 | 5 | 5.5 | 195 | 55 |
| Embodiment 1-24 | Carboxyl | Carboxy 1 | 0.8 | 2.5 | 4.6 | 195 | 30 |
| Embodiment 1-25 | Carboxyl | Carboxyl | 0.7 | 2.5 | 4.4 | 195 | 29 |
| Embodiment 1-26 | Carboxyl | Carboxyl | 0.5 | 2.5 | 4.0 | 195 | 27 |
| Comparative Embodiment 1-1 | Carboxyl | - | 0.5 | - | 2.9 | 199 | 10 |
| Comparative Embodiment 1-2 | Carboxyl | - | 0.5 | - | 2.8 | 198 | 12 |
| Comparative Embodiment 1-3 | Carboxyl | Carboxyl | 0.5 | 5 | 2.8 | 121 | 25 |

(continued)

| | Function al group in first binder | Function al group in second binder | Mass percent of first binder $w_1$ (%) | Mass percent of second binder $w_2$ (%) | Compressi on strength of binder $\alpha$ (MPa) | Tg of binder (°C) | Bonding force of porous coating (N/m) |
|---|---|---|---|---|---|---|---|
| Comparative Embodiment 1-4 | Carboxy l | Carboxy l | 0.5 | 5 | 2.8 | 119 | 30 |
| Comparative Embodiment 1-5 | Carboxy l | Carboxy l | 0.2 | 2 | 2.5 | 175 | 45 |
| Comparative Embodiment 1-6 | Carboxy l | Carboxy l | 0.3 | 1.5 | 2.5 | 178 | 47 |

### Table 1 (Continued)

| | MD heat shrink ratio $L_1$ | TD heat shrink ratio $L_2$ | $L_1/L_2$ | R |
|---|---|---|---|---|
| Embodiment 1-1 | 6.5% | 5.7% | 1.14 | 1000 |
| Embodiment 1-2 | 6.1% | 5.8% | 1.05 | 1000 |
| Embodiment 1-3 | 5.9% | 5.6% | 1.05 | 1000 |
| Embodiment 1-4 | 6.2% | 5.8% | 1.07 | 1000 |
| Embodiment 1-5 | 5.5% | 5.5% | 1.00 | 1000 |
| Embodiment 1-6 | 5.1% | 5.0% | 1.02 | 1000 |
| Embodiment 1-7 | 5.0% | 5.0% | 1.00 | 1000 |
| Embodiment 1-8 | 5.1% | 4.8% | 1.06 | 1000 |
| Embodiment 1-9 | 5.0% | 4.0% | 1.25 | 1000 |
| Embodiment 1-10 | 5.0% | 5.0% | 1.00 | 1000 |
| Embodiment 1-11 | 5.1% | 4.6% | 1.11 | 1000 |
| Embodiment 1-12 | 5.2% | 4.9% | 1.06 | 1000 |
| Embodiment 1-13 | 5.0% | 4.4% | 1.14 | 1000 |
| Embodiment 1-14 | 5.5% | 4.7% | 1.17 | 1000 |
| Embodiment 1-15 | 5.0% | 4.8% | 1.04 | 1000 |
| Embodiment 1-16 | 4.8% | 4.0% | 1.20 | 1000 |
| Embodiment 1-17 | 4.5% | 4.3% | 1.05 | 1000 |
| Embodiment 1-18 | 4.9% | 4.2% | 1.17 | 1000 |
| Embodiment 1-19 | 4.8% | 4.3% | 1.12 | 1000 |
| Embodiment 1-20 | 4.0% | 4.0% | 1.00 | 1000 |
| Embodiment 1-21 | 4.9% | 4.4% | 1.11 | 1000 |
| Embodiment 1-22 | 5.1% | 4.8% | 1.06 | 1000 |
| Embodiment 1-23 | 5.0% | 4.9% | 1.02 | 1000 |
| Embodiment 1-24 | 4.7% | 5.0% | 0.94 | 500 |
| Embodiment 1-25 | 5.2% | 5.1% | 1.02 | 500 |
| Embodiment 1-26 | 5.4% | 5.0% | 1.08 | 500 |

(continued)

|  | MD heat shrink ratio $L_1$ | TD heat shrink ratio $L_2$ | $L_1/L_2$ | R |
|---|---|---|---|---|
| Comparative Embodiment 1-1 | 12.1% | 10.2% | 1.19 | 1000 |
| Comparative Embodiment 1-2 | 11.4% | 11.1% | 1.03 | 1000 |
| Comparative Embodiment 1-3 | 25.40% | 22.40% | 1.13 | 1000 |
| Comparative Embodiment 1-4 | 27.80% | 25.10% | 1.11 | 1000 |
| Comparative Embodiment 1-5 | 40.90% | 39.80% | 1.03 | 1000 |
| Comparative Embodiment 1-6 | 37.80% | 35.90% | 1.05 | 1000 |

**Table 1 (Continued)**

|  | r | r/R | Hot-oven test pass rate | Nail penetration test pass rate |
|---|---|---|---|---|
| Embodiment 1-1 | 1089 | 1.89 | 100% | 100% |
| Embodiment 1-2 | 989 | 0.99 | 100% | 100% |
| Embodiment 1-3 | 1023 | 1.02 | 100% | 100% |
| Embodiment 1-4 | 1121 | 1.12 | 100% | 100% |
| Embodiment 1-5 | 999 | 1.00 | 100% | 100% |
| Embodiment 1-6 | 1001 | 1.00 | 100% | 100% |
| Embodiment 1-7 | 1121 | 1.12 | 100% | 100% |
| Embodiment 1-8 | 1122 | 1.12 | 100% | 100% |
| Embodiment 1-9 | 1211 | 1.21 | 100% | 100% |
| Embodiment 1-10 | 1089 | 1.09 | 100% | 100% |
| Embodiment 1-11 | 999 | 1.00 | 100% | 100% |
| Embodiment 1-12 | 1005 | 1.01 | 100% | 100% |
| Embodiment 1-13 | 1129 | 1.13 | 100% | 100% |
| Embodiment 1-14 | 1131 | 1.13 | 100% | 100% |
| Embodiment 1-15 | 1122 | 1.12 | 100% | 100% |
| Embodiment 1-16 | 1212 | 1.21 | 100% | 100% |
| Embodiment 1-17 | 1211 | 1.21 | 100% | 100% |
| Embodiment 1-18 | 1022 | 1.02 | 100% | 100% |
| Embodiment 1-19 | 1031 | 1.03 | 100% | 100% |
| Embodiment 1-20 | 1022 | 1.02 | 100% | 100% |
| Embodiment 1-21 | 1011 | 1.01 | 100% | 100% |
| Embodiment 1-22 | 1211 | 1.21 | 100% | 100% |
| Embodiment 1-23 | 1011 | 1.01 | 100% | 100% |
| Embodiment 1-24 | 1000 | 2.00 | 100% | 100% |
| Embodiment 1-25 | 1300 | 2.60 | 100% | 100% |
| Embodiment 1-26 | 1500 | 3.00 | 100% | 100% |
| Comparative Embodiment 1-1 | 5221 | 5.22 | 50% | 55% |
| Comparative Embodiment 1-2 | 5213 | 5.21 | 45% | 40% |
| Comparative Embodiment 1-3 | 5345 | 5.35 | 45% | 50% |
| Comparative Embodiment 1-4 | 5432 | 5.43 | 40% | 45% |

(continued)

| | r | r/R | Hot-oven test pass rate | Nail penetration test pass rate |
|---|---|---|---|---|
| Comparative Embodiment 1-5 | 5643 | 5.64 | 25% | 30% |
| Comparative Embodiment 1-6 | 5532 | 5.53 | 25% | 30% |

**Table 2 (To be continued)**

| Embodiment | Mass percent of first binder $w_1$ (%) | Mass percent of second binder w2 (%) | $w_1/w_2$ | Compression strength $\alpha$ (MPa) | Tg of binder (°C) | Bonding force of porous coating (N/m) |
|---|---|---|---|---|---|---|
| 1-1 | 0.5 | 5.0 | 0.1 | 4.50 | 175 | 45 |
| 2-1 | 0.9 | 4.6 | 0.2 | 5.50 | 177 | 47 |
| 2-2 | 1.8 | 3.7 | 0.5 | 6.00 | 179 | 49 |
| 2-3 | 2.75 | 2.75 | 1 | 7.30 | 177 | 52 |
| 2-4 | 3.67 | 1.83 | 2 | 7.90 | 179 | 58 |
| 2-5 | 4.13 | 1.37 | 3 | 8.30 | 183 | 33 |
| 2-6 | 4.4 | 1.1 | 4 | 8.50 | 188 | 44 |
| 2-7 | 4.5 | 1 | 4.5 | 4.4 | 178 | 53 |
| 2-8 | 4.6 | 0.9 | 5 | 4.3 | 177 | 58 |

**Table 2 (Continued)**

| Embodiment | MD heat shrink ratio $L_1$ | TD heat shrink ratio $L_2$ | $L_1/L_2$ | r | r/R | Hot-oven test pass rate | Nail penetration test pass rate |
|---|---|---|---|---|---|---|---|
| 1-1 | 6.5% | 5.7% | 1.14 | 1089 | 1.09 | 100% | 100% |
| 2-1 | 5.0% | 4.5% | 1.11 | 1011 | 1.01 | 100% | 100% |
| 2-2 | 4.4% | 3.9% | 1.13 | 997 | 1.00 | 100% | 100% |
| 2-3 | 4.3% | 4.1% | 1.05 | 1022 | 1.02 | 100% | 100% |
| 2-4 | 4.1% | 3.8% | 1.08 | 1012 | 1.01 | 100% | 100% |
| 2-5 | 4.0% | 4.0% | 1.00 | 1011 | 1.01 | 100% | 100% |
| 2-6 | 3.9% | 4.2% | 0.93 | 1001 | 1.00 | 100% | 100% |
| 2-7 | 6.8% | 6.7% | 1.00 | 1113 | 1.11 | 100% | 100% |
| 2-8 | 6.7% | 6.6% | 1.00 | 1121 | 1.12 | 100% | 100% |

**Table 3 (To be continued)**

| Embodiment | First binder | Second binder | Metal element 1 in first binder | Metal element 2 in first binder |
|---|---|---|---|---|
| 1-1 | Lithium methyl cellulose | Methyl acrylate | Li | - |
| 3-1 | Sodium methyl cellulose | Methyl acrylate | Na | - |
| 3-2 | Calcium methyl cellulose | Methyl acrylate | Ca | - |
| 3-3 | Magnesium methyl cellulose | Methyl acrylate | Mg | - |
| 3-4 | Aluminum methyl cellulose | Methyl acrylate | Al | - |
| 3-5 | Lithium methyl cellulose | Methyl acrylate | Li | Na |
| 3-6 | Lithium/magnesium methyl cellulose | Methyl acrylate | Li | Mg |
| 3-7 | Lithium/magnesium methyl cellulose | Methyl acrylate | Li | Mg |

(continued)

| Embodiment | First binder | Second binder | Metal element 1 in first binder | Metal element 2 in first binder |
|---|---|---|---|---|
| 3-8 | Lithium/magnesium methyl cellulose | Methyl acrylate | Li | Mg |
| 3-9 | Lithium/magnesium methyl cellulose | Methyl acrylate | Li | Mg |
| 3-10 | Lithium/magnesium methyl cellulose | Methyl acrylate | Li | Mg |
| 3-11 | Lithium/calcium methyl cellulose | Methyl acrylate | Li | Ca |
| 3-12 | Lithium/calcium methyl cellulose | Methyl acrylate | Li | Ca |
| 3-13 | Lithium/calcium methyl cellulose | Methyl acrylate | Li | Ca |
| 3-14 | Lithium/calcium methyl cellulose | Methyl acrylate | Li | Ca |
| 3-15 | Lithium/calcium methyl cellulose | Methyl acrylate | Li | Ca |
| 3-16 | Lithium/aluminum methyl cellulose | Methyl acrylate | Li | Al |
| 3-17 | Lithium/aluminum methyl cellulose | Methyl acrylate | Li | Al |
| 3-18 | Lithium/aluminum methyl cellulose | Methyl acrylate | Li | Al |
| 3-19 | Lithium/aluminum methyl cellulose | Methyl acrylate | Li | Al |
| 3-20 | Lithium/aluminum methyl cellulose | Methyl acrylate | Li | Al |

## Table 3 (Continued)

| Embodiment | Molar ratio a of metal element with a valence of +1 to metal element with a valence of +2 | Molar ratio b of metal element with a valence of +1 to metal element with a valence of +3 | Compression strength of binder $\alpha$ (MPa) | Tg of binder (°C) | Bonding force of porous coating (N/m) |
|---|---|---|---|---|---|
| 1-1 | - | - | 4.5 | 175 | 45 |
| 3-1 | - | - | 4.5 | 176 | 46 |
| 3-2 | - | - | 5.2 | 177 | 44 |
| 3-3 | - | - | 5.3 | 177 | 47 |
| 3-4 | - | - | 6.1 | 180 | 48 |
| 3-5 | - | - | 4.4 | 175 | 43 |
| 3-6 | 11 | - | 5.6 | 177 | 43 |
| 3-7 | 10 | - | 5.8 | 181 | 45 |
| 3-8 | 5 | - | 7.4 | 189 | 44 |
| 3-9 | 1 | - | 9.6 | 198 | 47 |
| 3-10 | 0.5 | - | 9.6 | 199 | 30 |
| 3-11 | 11 | - | 5.7 | 180 | 44 |
| 3-12 | 10 | - | 6.1 | 182 | 45 |
| 3-13 | 5 | - | 7.8 | 190 | 46 |
| 3-14 | 1 | - | 9.8 | 199 | 44 |
| 3-15 | 0.5 | - | 5.7 | 181 | 40 |
| 3-16 | - | 51 | 5.0 | 180 | 38 |
| 3-17 | - | 45 | 5.5 | 185 | 46 |
| 3-18 | - | 25 | 7.1 | 190 | 47 |
| 3-19 | - | 1 | 9.8 | 211 | 47 |

(continued)

| Embodiment | Molar ratio a of metal element with a valence of +1 to metal element with a valence of +2 | Molar ratio b of metal element with a valence of +1 to metal element with a valence of +3 | Compression strength of binder $\alpha$ (MPa) | Tg of binder (°C) | Bonding force of porous coating (N/m) |
|---|---|---|---|---|---|
| 3-20 | - | 0.5 | 9.0 | 198 | 29 |

### Table 3 (Continued)

| Embodiment | MD heat shrink ratio $L_1$ | TD heat shrink ratio $L_2$ | $L_1/L_2$ | r | r/R | Hot-oven test pass rate | Nail penetration test pass rate |
|---|---|---|---|---|---|---|---|
| 1-1 | 6.5% | 5.7% | 1.14 | 1089 | 1.89 | 100% | 100% |
| 3-1 | 6.4% | 5.9% | 1.08 | 1001 | 1.00 | 100% | 100% |
| 3-2 | 6.3% | 5.8% | 1.09 | 1121 | 1.12 | 100% | 100% |
| 3-3 | 5.9% | 5.4% | 1.09 | 1121 | 1.12 | 100% | 100% |
| 3-4 | 5.8% | 5.3% | 1.09 | 1023 | 1.02 | 100% | 100% |
| 3-5 | 6.4% | 6.0% | 1.07 | 1029 | 1.03 | 100% | 100% |
| 3-6 | 5.4% | 5.1% | 1.06 | 1088 | 1.10 | 100% | 100% |
| 3-7 | 4.2% | 4.9% | 0.86 | 1079 | 1.09 | 100% | 100% |
| 3-8 | 4.6% | 4.3% | 1.07 | 1068 | 1.03 | 100% | 100% |
| 3-9 | 4.5% | 4.1% | 1.10 | 1059 | 1.04 | 100% | 100% |
| 3-10 | 5.3% | 5.2% | 1.02 | 1089 | 1.10 | 100% | 100% |
| 3-11 | 6.0% | 5.5% | 1.09 | 1088 | 1.09 | 100% | 100% |
| 3-12 | 6.3% | 5.5% | 1.15 | 1088 | 1.09 | 100% | 100% |
| 3-13 | 6.0% | 5.5% | 1.09 | 1056 | 1.06 | 100% | 100% |
| 3-14 | 5.4% | 5.0% | 1.08 | 1081 | 1.08 | 100% | 100% |
| 3-15 | 6.1% | 5.5 | 1.11 | 1088 | 1.09 | 100% | 100% |
| 3-16 | 5.6% | 5.2% | 1.08 | 1022 | 1.02 | 100% | 100% |
| 3-17 | 5.6% | 5.0% | 1.12 | 1022 | 1.02 | 100% | 100% |
| 3-18 | 5.5% | 5.0% | 1.10 | 1019 | 1.02 | 100% | 100% |
| 3-19 | 5.5% | 4.2% | 1.31 | 1018 | 1.02 | 100% | 100% |
| 3-20 | 5.4% | 5.2% | 1.04 | 1016 | 1.02 | 100% | 100% |

### Table 4 (To be continued)

| Embodiment | Inorganic particles | $D_{v50}$ of inorganic particles ($\mu$m) | Mass percent of inorganic particles | $S_{BET}$ of inorganic particles (m$^2$/g) | Bonding force of porous coating (N/m) |
|---|---|---|---|---|---|
| 3-7 | Aluminum oxide | 0.8 | 93.5% | 8.8 | 45 |
| 4-1 | Boehmite | 0.8 | 93.5% | 8.8 | 46 |
| 4-2 | Zirconium oxide | 0.8 | 93.5% | 8.8 | 42 |
| 4-3 | Boron nitride | 0.8 | 93.5% | 8.8 | 44 |
| 4-4 | Aluminum nitride | 0.8 | 93.5% | 8.8 | 46 |
| 4-5 | Magnesium hydroxide | 0.8 | 93.5% | 8.8 | 47 |
| 4-6 | Boehmite | 0.3 | 93.5% | 9.9 | 25 |

(continued)

| Embodiment | Inorganic particles | $D_{v50}$ of inorganic particles ($\mu$m) | Mass percent of inorganic particles | $S_{BET}$ of inorganic particles (m²/g) | Bonding force of porous coating (N/m) |
|---|---|---|---|---|---|
| 4-7 | Boehmite | 0.5 | 93.5% | 8.9 | 34 |
| 4-8 | Boehmite | 1.0 | 93.5% | 7.8 | 47 |
| 4-9 | Boehmite | 1.5 | 93.5% | 7.5 | 50 |
| 4-10 | Boehmite | 2.0 | 93.5% | 6.7 | 49 |
| 4-11 | Boehmite | 2.5 | 93.5% | 6.3 | 52 |
| 4-12 | Boehmite | 3.0 | 93.5% | 6.1 | 55 |
| 4-13 | Boehmite | 0.8 | 90.0% | 8.8 | 68 |
| 4-14 | Boehmite | 0.8 | 92.0% | 8.8 | 55 |
| 4-15 | Boehmite | 0.8 | 94.0% | 8.8 | 44 |
| 4-16 | Boehmite | 0.8 | 95.0% | 8.8 | 40 |

**Table 4 (Continued)**

| Embodiment | MD heat shrink ratio $L_1$ | TD heat shrink ratio $L_2$ | $L_1/L_2$ | R | r | r/R | Hot-oven test pass rate | Nail penetration test pass rate |
|---|---|---|---|---|---|---|---|---|
| 3-7 | 6.2% | 5.9% | 1.05 | 1000 | 1089 | 1.09 | 100% | 100% |
| 4-1 | 6.0% | 5.7% | 1.05 | 1000 | 1102 | 1.10 | 100% | 100% |
| 4-2 | 5.9% | 5.6% | 1.05 | 1000 | 1099 | 1.10 | 100% | 100% |
| 4-3 | 5.8% | 5.5% | 1.05 | 1000 | 1089 | 1.09 | 100% | 100% |
| 4-4 | 5.9% | 5.7% | 1.04 | 1000 | 1120 | 1.12 | 100% | 100% |
| 4-5 | 6.1% | 5.7% | 1.07 | 1000 | 1022 | 1.02 | 100% | 100% |
| 4-6 | 5.1% | 4.6% | 1.11 | 1000 | 1001 | 1.00 | 100% | 100% |
| 4-7 | 5.5% | 5.0% | 1.10 | 1000 | 1002 | 1.00 | 100% | 100% |
| 4-8 | 5.9% | 5.7% | 1.04 | 1000 | 1088 | 1.09 | 100% | 100% |
| 4-9 | 6.1% | 5.7% | 1.07 | 1000 | 1091 | 1.09 | 100% | 100% |
| 4-10 | 6.0% | 5.8% | 1.03 | 1000 | 1089 | 1.09 | 95.0% | 100% |
| 4-11 | 6.2% | 5.8% | 1.07 | 1000 | 1092 | 1.09 | 90.0% | 95.0% |
| 4-12 | 6.8% | 6.4% | 1.06 | 1000 | 1129 | 1.13 | 90.0% | 95.0% |
| 4-13 | 8.1% | 7.8% | 1.04 | 1000 | 1211 | 1.21 | 100% | 100% |
| 4-14 | 6.8% | 6.3% | 1.08 | 1000 | 1102 | 1.10 | 100% | 100% |
| 4-15 | 6.1% | 5.7% | 1.07 | 1000 | 1098 | 1.10 | 95.0% | 95.0% |
| 4-16 | 5.8% | 5.5% | 1.05 | 1000 | 1001 | 1.00 | 95.0% | 95.0% |

**Table 5 (To be continued)**

| Embodiment | Mass percent of inorganic particles | Wetting agent | Mass percent of wetting agent (%) | Bonding force of porous coating (N/m) |
|---|---|---|---|---|
| 3-7 | 93.5% | Polyoxyethylene alkylphenol ether | 1.0% | 45 |

(continued)

| Embodiment | Mass percent of inorganic particles | Wetting agent | Mass percent of wetting agent (%) | Bonding force of porous coating (N/m) |
|---|---|---|---|---|
| 5-1 | 93.5% | Polyoxyethylene fatty alcohol ether | 1.0% | 46 |
| 5-2 | 93.5% | Polyoxyethylene polyoxypropylene block copolymer | 1.0% | 47 |
| 5-3 | 93.5% | Siloxane | 1.0% | 44 |
| 5-4 | 94.0% | Siloxane | 0.5% | 46 |
| 5-5 | 93.2% | Siloxane | 1.3% | 40 |
| 5-6 | 92.7% | Siloxane | 1.8% | 35 |
| 5-7 | 93.5% | Siloxane | 0.3% | 44 |

## Table 5 (Continued)

| Embodiment | MD heat shrink ratio $L_1$ | TD heat shrink ratio $L_2$ | $L_1/L_2$ | r | r/R | Hot-oven test pass rate | Nail penetration test pass rate |
|---|---|---|---|---|---|---|---|
| 3-7 | 6.2% | 5.9% | 1.05 | 1089 | 1.09 | 100% | 100% |
| 5-1 | 6.0% | 5.8% | 1.03 | 1099 | 1.10 | 100% | 100% |
| 5-2 | 5.8% | 5.5% | 1.05 | 1088 | 1.09 | 100% | 100% |
| 5-3 | 5.9% | 5.7% | 1.04 | 1078 | 1.08 | 100% | 100% |
| 5-4 | 5.9% | 5.6% | 1.05 | 1002 | 1.00 | 100% | 100% |
| 5-5 | 6.3% | 6.1% | 1.03 | 1001 | 1.00 | 95% | 95.0% |
| 5-6 | 6.9% | 6.6% | 1.05 | 1099 | 1.10 | 95% | 95.0% |
| 5-7 | 6.1% | 6.0% | 1.02 | 1090 | 1.09 | 90% | 90% |

## Table 6 (To be continued)

| Embodiment | Thickness of porous coating ($\mu$m) | Bonding force of porous coating (N/m) | MD heat shrink ratio $L_1$ | TD heat shrink ratio $L_2$ | $L_1/L_2$ |
|---|---|---|---|---|---|
| 4-6 | 0.5 | 25 | 5.1% | 4.6% | 1.11 |
| 6-1 | 1.0 | 26 | 4.7% | 4.5% | 1.04 |
| 6-2 | 1.5 | 25 | 4.5% | 4.4% | 1.02 |
| 6-3 | 2.0 | 27 | 4.5% | 4.3% | 1.05 |
| 6-4 | 2.5 | 24 | 4.4% | 4.1% | 1.07 |
| 6-5 | 3.0 | 25 | 4.2% | 4.0% | 1.05 |
| 6-6 | 0.3 | 25 | 7.6% | 7.5% | 1.01 |
| 6-7 | 3.5 | 26 | 5.2% | 4.7% | 1.11 |

## Table 6 (Continued)

| Embodiment | R | r | r/R | Hot-oven test pass rate | Nail penetration test pass rate |
|---|---|---|---|---|---|
| 4-6 | 1000 | 1001 | 1.00 | 100% | 100% |
| 6-1 | 1000 | 1002 | 1.00 | 100% | 100% |
| 6-2 | 1000 | 1000 | 1.00 | 100% | 100% |

(continued)

| Embodiment | R | r | r/R | Hot-oven test pass rate | Nail penetration test pass rate |
|---|---|---|---|---|---|
| 6-3 | 1000 | 1001 | 1.00 | 100% | 100% |
| 6-4 | 1000 | 1002 | 1.00 | 100% | 100% |
| 6-5 | 1000 | 1000 | 1.00 | 100% | 100% |
| 6-6 | 500 | 665 | 1.33 | 100% | 100% |
| 6-7 | 500 | 550 | 1.00 | 100% | 100% |

References to "embodiments", "some embodiments", "an embodiment", "another example", "example", "specific example" or "some examples" throughout the specification mean that specified features, structures, materials, or characteristics described in such embodiment(s) or example(s) are included in at least one embodiment or example in this application. Therefore, descriptions throughout the specification, which make references by using expressions such as "in some embodiments", "in an embodiment", "in one embodiment", "in another example", "in an example", "in a specific example", or "example", do not necessarily refer to the same embodiment(s) or example(s) in this application. In addition, specific features, structures, materials, or characteristics herein may be combined in one or more embodiments or examples in any appropriate manner.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

**Claims**

1.  A separator, comprising:

    a porous substrate and a porous coating, wherein the porous coating is disposed on at least one surface of the porous substrate, the porous coating comprises inorganic particles and a binder, the binder comprises a first binder, and the first binder comprises a metal element, wherein
    when a rupture hole is generated on the separator by thermally puncturing the separator by using a round needle with a diameter of R heated to 500 °C, a maximum value of a distance between any two points on an edge of the rupture hole is r in a case that the two points are connected to form a line and the distance between the two points is calculated, satisfying:

$$400\ \mu m \leq R \leq 1000\ \mu m \text{ and } 0.9 \leq r/R \leq 5.$$

2.  The separator according to claim 1, wherein $400\ \mu m \leq r \leq 1500\ \mu m$.

3.  The separator according to claim 1, wherein compression strength of the binder is $\alpha$ MPa, satisfying: $0.5 \leq \alpha \leq 10$.

4.  The separator according to claim 1, wherein a glass transition temperature of the binder is $T_g$, satisfying: $150\ °C \leq T_g \leq 300\ °C$.

5.  The separator according to claim 1, wherein the metal element comprises at least one of a metal element with a valence of +1, a metal element with a valence of +2, or a metal element with a valence of +3.

6.  The separator according to claim 1, wherein the metal element comprises at least two of a metal element with a valence of +1, a metal element with a valence of +2, or a metal element with a valence of +3.

7.  The separator according to claim 1, wherein the first binder satisfies at least one of the following conditions (a) to (c):

    (a) the metal element with a valence of +1 comprises at least one of Li or Na;
    (b) the metal element with a valence of +2 comprises at least one of Ca or Mg; or
    (c) the metal element with a valence of +3 comprises Al.

8.   The separator according to claim 1, wherein the binder satisfies at least one of the following conditions (d) to (e):

(d) a molar ratio of the metal element with a valence of +1 to the metal element with a valence of +2 is a, satisfying: $1 \leq a \leq 10$; or
(e) a molar ratio of the metal element with a valence of +1 to the metal element with a valence of +3 is b, satisfying: $1 \leq b \leq 50$.

9.   The separator according to claim 1, wherein the first binder comprises at least one of a carboxyl group or a sulfonic acid group, and a pH value of the first binder is $pH_1$, satisfying: $7 \leq pH_1 \leq 11$.

10.   The separator according to claim 1, wherein the first binder comprises at least one of: sodium polymethylcellulose, lithium polymethylcellulose, lithium polycarboxymethylcellulose, lithium polyhydroxypropylmethylcellulose, calcium polyacrylate, lithium polyacrylate, or calcium polymethacrylate.

11.   The separator according to claim 1, wherein the binder further comprises a second binder, and, based on a total mass of the porous coating, a mass ratio of the first binder to the second binder is $\beta$, satisfying: $0.2 \leq \beta \leq 4$.

12.   The separator according to claim 11, wherein the second binder comprises at least one of a carboxyl group or a sulfonic acid group, and a pH value of the second binder is $pH_2$, satisfying: $3 \leq pH_2 \leq 7$.

13.   The separator according to claim 11, wherein the second binder comprises at least one of: polybutyl acrylate, polyethyl acrylate, polybutyl methacrylate, polymethyl methacrylate, or styrene-butadiene rubber.

14.   The separator according to claim 1, wherein a specific surface area of the inorganic particles is $S_{BET}$ m²/g, satisfying: $2 \leq S_{BET} \leq 10$.

15.   The separator according to claim 1, wherein particle diameters $D_{v50}$ and $D_{v99}$ of the inorganic particles satisfy $0.3 \, \mu m \leq D_{v50} \leq 3 \, \mu m$ and $D_{v99} \leq 4 \, \mu m$, respectively.

16.   The separator according to claim 1, wherein the inorganic particles comprise at least one of: aluminum oxide, boehmite, zirconium oxide, boron nitride, silicon nitride, or aluminum nitride.

17.   The separator according to claim 1, wherein the porous coating further comprises a wetting agent, and, based on a total mass of the porous coating, a mass percent of the inorganic particles is $m_1$ wt%, a mass percent of the binder is $m_2$ wt%, and a mass percent of the wetting agent is $m_3$ wt%, satisfying: $90 \leq m_1 \leq 96$, $3 \leq m_2 \leq 9$, $0.5 \leq m_3 \leq 2$, and $m_1 + m_2 + m_3 = 100$.

18.   The separator according to claim 17, wherein the wetting agent comprises at least one of: polyoxyethylene alkylphenol ether, polyoxyethylene fatty alcohol ether, polyoxyethylene polyoxypropylene block copolymer, or siloxane.

19.   The separator according to claim 1, wherein, when the separator is left to stand at 150 °C for 1 hour, in contrast to an initial length and an initial width of the separator, a heat shrink ratio of the separator in a machine direction MD is $L_1$, and a heat shrink ratio of the separator in a transverse direction TD is $L_2$, satisfying: $L_1 < 10\%$, $L_2 < 10\%$, and $0.75 \leq L_1/L_2 \leq 1.2$.

20.   The separator according to claim 1, wherein a thickness of the porous coating is T $\mu m$, satisfying: $0.5 \leq T \leq 3$.

21.   The separator according to claim 1, wherein a bonding force of the porous coating is F N/m, satisfying: $5 \leq F \leq 100$.

22.   An electrochemical device, wherein the electrochemical device comprises the separator according to any one of claims 1 to 21.

23.   An electronic device, wherein the electronic device comprises the electrochemical device according to claim 22.

FIG. 1

FIG. 2

## INTERNATIONAL SEARCH REPORT

| International application No. |
| --- |
| **PCT/CN2022/088840** |

| **A.** | **CLASSIFICATION OF SUBJECT MATTER** |
| --- | --- |

H01M 50/431(2021.01)i

According to International Patent Classification (IPC) or to both national classification and IPC

| **B.** | **FIELDS SEARCHED** |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 隔膜, 隔离膜, 隔板, 多孔, 基材, 无机, 颗粒, 粘结剂, 纤维素, 丙烯酸, 钠, 锂, 钙, 热穿刺, 针, 直径, 500°C, 温度, 加热, membrane, diaphragm, separator, porous, base, inorganic, particle, binder, cellulose, acrylic, acid, sodium, lithium, calcium, hot, puncture, needle, diameter, temperature, heat+

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | CN 105789523 A (SHENZHEN XURAN ELECTRONICS CO., LTD.) 20 July 2016 (2016-07-20)<br>    description, paragraphs 6-34 | 1-23 |
| A | CN 109616604 A (ZHUHAI COSLIGHT BATTERY CO., LTD.) 12 April 2019 (2019-04-12)<br>    entire document | 1-23 |
| A | CN 104048987 A (HEFEI GUOXUAN HIGH-TECH POWER ENERGY CO., LTD.) 17 September 2014 (2014-09-17)<br>    entire document | 1-23 |
| A | CN 110926966 A (CHINA AUTOMOTIVE BATTERY RESEARCH INSTITUTE CO., LTD.) 27 March 2020 (2020-03-27)<br>    entire document | 1-23 |
| A | CN 101707242 A (DONGGUAN AMPEREX TECHNOLOGY LTD.) 12 May 2010 (2010-05-12)<br>    entire document | 1-23 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 December 2022** | **22 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/088840**

**C.** **DOCUMENTS CONSIDERED TO BE RELEVANT**

| Category* | Citation of document, with indication, where appropriate, of the relevant passages | Relevant to claim No. |
|---|---|---|
| A | US 2019379022 A1 (NINGDE AMPEREX TECHNOLOGY LTD.) 12 December 2019 (2019-12-12)<br>　　entire document | 1-23 |

Form PCT/ISA/210 (second sheet) (January 2015)

**INTERNATIONAL SEARCH REPORT**
Information on patent family members

International application No.

**PCT/CN2022/088840**

| Patent document cited in search report | | | Publication date (day/month/year) | Patent family member(s) | | | Publication date (day/month/year) |
|---|---|---|---|---|---|---|---|
| CN | 105789523 | A | 20 July 2016 | None | | | |
| CN | 109616604 | A | 12 April 2019 | WO | 2020134763 | A1 | 02 July 2020 |
| CN | 104048987 | A | 17 September 2014 | None | | | |
| CN | 110926966 | A | 27 March 2020 | None | | | |
| CN | 101707242 | A | 12 May 2010 | None | | | |
| US | 2019379022 | A1 | 12 December 2019 | US | 2022140438 | A1 | 05 May 2022 |
| | | | | CN | 108832061 | A | 16 November 2018 |
| | | | | EP | 3579303 | A1 | 11 December 2019 |
| | | | | ES | 2875823 | T3 | 11 November 2021 |

Form PCT/ISA/210 (patent family annex) (January 2015)